# EUROPEAN PATENT SPECIFICATION

(11) **EP 1 026 440 B1**
(45) Date of publication and mention of the grant of the patent: **02.04.2003**
(21) Application number: 98950119.2
(22) Date of filing: 27.10.1998
(51) Int. Cl.: F21V 9/16, F21K 2/00

(54) **IMPROVED LAMP**
LEUCHTKÖRPER
LAMPE AMELIOREE

(30) Priority: 31.10.1997 ES 9702821 U
(43) Date of publication of application: 09.08.2000
(73) Proprietor: Matarrodona Martinez, Jorge, 08036 Barcelona (ES)
(72) Inventor: Matarrodona Martinez, Jorge, 08036 Barcelona (ES)
(74) Representative: Körner, Ekkehard, Dipl.-Ing.
(86) International application number: ES9800291
(87) International publication number: WO99023414

(56) References cited:
- EP-A- 0 522 785
- EP-A- 0 856 871
- GB-A- 2 301 372
- US-A- 4 245 282
- US-A- 4 420 898
- US-A- 4 481 560
- US-A- 4 546 416

## Description

The present invention refers to a lamp that emits an afterglow after the lamp is extinguished.

### Background of the invention

In areas in which large numbers of people gather, such as large stores, theatres and underground shopping malls, protecting lives is a priority and provision must be made for safety and speedy evacuation even in the event of a blackout caused in the electric mains powering the lamps installed for illuminating those areas.

An approach to solve this problem involves the installation of battery-powered emergency lamps. However, this solution provides isolated light spots only which fail to define paths for people to find their way, which hampers their movement, particularly in stores and on business premises having complex subdivisions. Another drawback of such current technique is the high cost of the emergency lamps and their emergency battery power system and their accessories, rechargeable batteries, etc.

EP 0 856 871 A1 discloses a fluorescent lamp that emits an afterglow sufficient to allow discernment of objects for at least ten minutes after the lamp is extinguished. The lamp comprises first and second phosphor coatings composed of one or more types of phosphor which are layered on the inner surface of the glass bulb of a fluorescent lamp. The first phosphor coating on the glass bulb side is composed on a phosphor which has a long afterglow property and is applied at 0.2 mg/cm², and the second phosphor coating is composed of a halo-phosphate phosphor or rare-earth phosphor. The phosphor coating having a long afterglow property may include a europium-activated or europium- and dysprosium-activated strontium aluminate phosphor.

From GB 2 301 372 A an afterglow lamp comprising a long decay phosphor containing activated europium oxide is known having a light emitting section for the conversion of electrical energy to optical energy and a fluorescent layer; excited to emit light by the light emitting section and comprising a long decay phosphor composition including at least one of Mg, Ca, Sr, Ba and Zn, imperatively europium, a coactivator selected from at least one of Mn, Zr, Nb, Pr, Nd, Gd, Tb, Dy, Ho, Er, Tm, Yb and Lu, and further a halogen element selected from F, Cl, Br and I. According to the disclosure, the lamp may comprise a first layer on the inner surface of the light transmitted glass as a long decay phosphor layer, and a second layer formed as an illuminating fluorescent substance layer on the first layer.

### Summary of the invention

The applicant has devised an improved lamp, based on a generic type lamp, using a bulb or a glass tube as a supporting element.

It is the object of the invention, to provide a low-cost source-powered emergency lamp having afterglow properties.

This object is attained by the features of claim 1. Preferred embodiments of the invention or subject matter of the dependent claims.

Upon treating the surface of a lamp, whether it be the glass bulb of an incandescent lamp or the glass tube of a fluorescent lamp, a luminescent spot or line will result from a plurality of such lamps respectively installed in business premises that are able to provide broken lines defining paths to be followed by people in the event of a power interruption, lasting for between five and sixty minutes, for instance thirty minutes. Thus, due to their afterglow effect, the lamps of the invention will actually serve as emergency lamps in the event of a power interruption, enabling people to find their way out.

In the following, the invention will be explained with reference to the drawings whose figures show the most significant details of the invention for illustrative and non-limiting purposes.

### Brief description of the drawings

- Fig. 1: is a perspective view of a fluorescent tube or lamp provided with the improvement of the present invention.
- Fig. 2 and 3: each are schematic views of a fluorescent tube or lamp provided with the improvement of the present invention, differing from one another in the location of the luminescent product at the supporting surface.

### Description of a preferred embodiment

In accordance with the above figures and with the reference numerals used therein, the preferred embodiment comprises a fluorescent tube 1 being the supporting element of a luminescent product 2 having pigments of SrAl₂O₄:EuDy and ZnS applied to the supporting element as first layer.

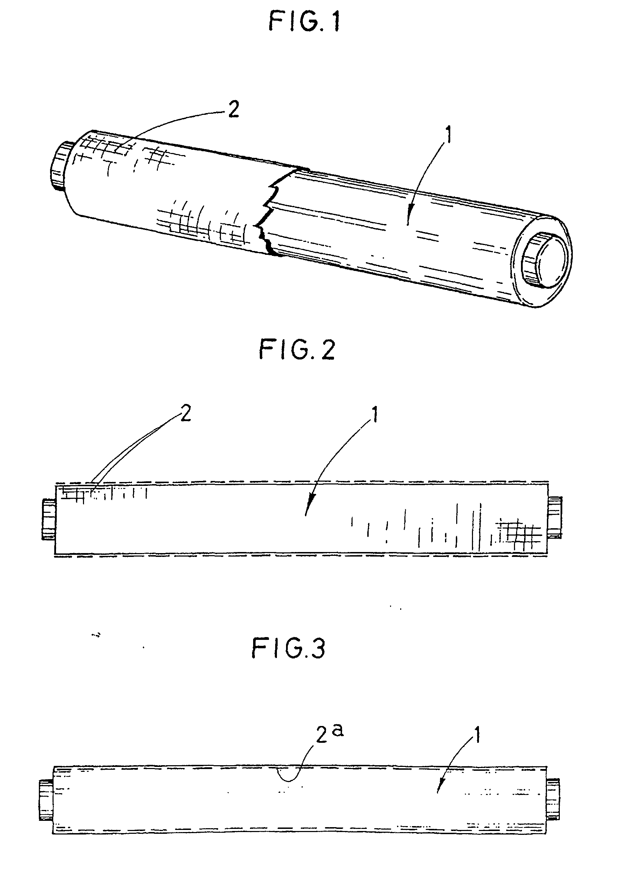

This product or first layer 2 may be applied on the outer surface of the tube 1, as is shown in fig. 1 and 2, or on the inner surface of said tube 1, which is shown as 2a in fig. 3. Further, a second triphosphorous coating of (SrCaBaMg)₅(PO₄)Cl:Eu is applied on the first layer.

The luminescent product applied on the supporting structure is able to capture the light coming from any light emitting element within the tube when same is switched on, and is able to emit its own light by afterglow effect when power to the light emitting element is switched off for whatever reason.

## Claims

1. A lamp, having a light source and a glass support formed as a bulb of an incandescent lamp or as a glass tube of a fluorescent lamp, said glass support being coated by a first layer of a luminescent product having pigments of SrAl₂O₄:EuDy and ZnS which in turn is coated by a second layer of a luminescent product comprising (SrCaBaMg)₅(PO₄)₃Cl:Eu.

2. The lamp of claim 1 wherein the luminescent products are coated on the inner surface of the glass support.

3. The lamp of claim 1 or 2, having a excitation time of the luminescent product not exceeding ten minutes and an emission time exceeding sixty minutes.

## Patentansprüche

1. Eine Lampe mit einer Lichtquelle und einem Glasträger, der als ein Kolben einer Glühlampe oder als ein Glasrohr einer Leuchtstofflampe ausgebildet ist, wobei der Glasträger mit einer ersten Schicht aus einem lichtausstrahlenden Erzeugnis beschichtet ist, die Pigmente aus SrAl₂O₄:EuDy und ZnS enthält, die wiederum mit einer zweiten Schicht aus einem lichtausstrahlenden Erzeugnis beschichtet ist, das (SrCaBaMg)₅(PO₄)₃Cl:Eu enthält.

2. Lampe nach Anspruch 1, bei der die lichtausstrahlenden Erzeugnisse auf der Innenfläche des Glasträgers aufgebracht sind.

3. Lampe nach Anspruch 1 oder 2, bei der das lichtausstrahlende Erzeugnis eine Erregungszeit hat, die 10 Minuten nicht überschreitet, und eine Emissionszeit hat, die 60 Minuten überschreitet.

## Revendications

1. Une lampe comportant une source de lumière et un support en verre en forme d'ampoule de lampe à incandescence ou en forme de tube dune lampe fluorescente, appelé support en verre, revêtu d'une première couche de produit luminescent comportant des pigments de SrAl₂O₄:EuDy et ZnS qui, à son tour, est doublée d'une seconde couche de produit luminescent comprenant (SrCaBaMg)₅(PO₄)₃Cl:Eu.

2. La lampe de la revendication 1 dont les produits luminescents sont appliqués sur la surface interne du support en verre.

3. La lampe de la revendication 1 ou 2, dont le temps d'excitation du produit luminescent ne dépasse pas dix minutes et le temps d'émission est supérieur à soixante minutes.
